# EUROPEAN PATENT SPECIFICATION

(11) **EP 1 808 244 B1**
(45) Date of publication and mention of the grant of the patent: **22.09.2010**
(21) Application number: 05793818.5
(22) Date of filing: 05.10.2005
(51) Int. Cl.: B22F 9/04, B22F 1/00, H01G 9/052

(54) **NIOBIUM POWDER, NIOBIUM GRANULES, NIOBIUM SINTER AND CAPACITOR, AND PRODUCTION PROCESSES THEREOF**
NIOBPULVER, NIOBGRANULAT, NIOBSINTERKÖRPER UND KONDENSATOR UND HERSTELLUNGSVERFAHREN DAFÜR
POUDRE DE NIOBIUM, GRANULÉS DE NIOBIUM, PIÈCE FRITTÉE ET CONDENSATUER AU NIOBIUM, ET PROCÉDÉ DE FABRICATION DE CEUX-CI

(30) Priority: 06.10.2004 JP 2004293252
(43) Date of publication of application: 18.07.2007
(73) Proprietor: SHOWA DENKO K.K., Tokyo 105-8518 (JP)
(72) Inventor: AMITA, Hitoshi, Showa Denko K.K., Chiba-shi, Chiba 267-0056 (JP); OMORI, Kazuhiro, Showa Denko K.K., Omachi-shi (JP)
(74) Representative: Strehl Schübel-Hopf & Partner
(86) International application number: PCT/JP2005/018740
(87) International publication number: WO 2006/038720

(56) References cited:
- JP-A- 2003 003 204
- JP-A- 2003 003 204
- JP-A- 2003 299 977
- JP-A- 2004 500 480
- US-A1- 2003 089 197
- F. HONDA AND T. SAITO: "Tribochemical characterization of the lubrication film at the Si3N4/Si3N4 interface sliding in aqueous solutions" APPLIED SURFACE SCIENCE, vol. 92, February 1996 (1996-02), pages 651-655, XP002532480

## Description

### TECHNICAL FIELD

The present invention relates to a production method of niobium powder. More specifically, the present invention relates to a method of efficiently producing niobium powder or niobium hydride alloy powder for a capacitor with which a capacitor having a high capacitance per unit mass and good leakage current characteristics can be obtained.

### BACKGROUND ART

With respect to capacitors used in electronic devices such as cellular phones and personal computers, there are demands for a capacitor of smaller size and a larger capacitance. Among these capacitors, a tantalum capacitor, which has a large capacitance for its size and also has good performance, is being used. As an anode in a tantalum capacitor, generally a tantalum sintered body is used. In order to increase the capacitance of a tantalum capacitor, it is necessary to increase the mass of the sintered body or to use a sintered body increased in the surface area by finely pulverizing the tantalum powder.

In the method where the mass of the sintered body is increased, since the size of the resulting capacitor inevitably increases, the demand for reduction in the size cannot be satisfied. Also, in the method where the surface area is increased by finely pulverizing the tantalum powder, since the pore diameter of the tantalum sintered body decreases and the number of closed pores increases, impregnation of a cathode to be carried out in the subsequent step is difficult. In order to overcome these defects, a capacitor obtained from a sintered body of a material having a higher dielectric constant than that of tantalum. Examples of such a material having a high dielectric constant include niobium and niobium alloy.

However, in JP 55-157226 A, there is disclosed, as a production method of niobiumpowder for a capacitor, a production method of a sintered element for a capacitor, which is obtained by molding and sintering niobium power of 2 µm or less in particle size from niobium aggregated powder. However, the document includes no detailed description about the characteristics of a capacitor.

In addition, in US 4,084,965, there is disclosed a capacitor obtained by sintering 5.1-µm niobium powder which is obtained by hydrogenizing and grinding a niobium ingot. However, the capacitor has a large leakage current (hereinafter, which may be also abbreviated as LC).

In JP 2003-003204 A, there is disclosed a method of obtaining fine powder of niobium hydride or an alloy of niobium hydride by carrying out pulverization using spherical zirconia or niobium and a dispersion medium (e.g., water, an organic solvent, or liquefied gas) as a pulverization aid at pulverization temperature ranging from-200 °C to 30°C. However, in a case where niobium powder having an average particle size of less than 0.6 µm which is a preferable size as niobium powder for a capacitor is produced by using zirconia or niobium beads as grinding aid, a longer grinding time period is required due to an increase in viscosity of slurry of a dispersion medium containing the niobium power.

It is a well-known technology to hydrogenate a niobium ingot and grind it in the presence of an appropriate dispersion medium with an appropriate grinder (see, for example, US 4, 084, 965). However, when a niobium powder for a capacitor is produced using such a method, it is difficult to obtain high reliability as a capacitor in the resulting powder, due to its high LC value and considerable variation. This is attributable to oxygen present in the dispersion medium which reacts with or is adsorbed to an active surface of niobium hydride generated owing to heat generation during the grinding or the grinding, to thereby form a crystallized niobium oxide upon production of a sintered body, thereby adversely affecting LC inparticular. Therefore, lowering the oxygen content in niobium hydride powder is important to improve LC characteristics. For holding down the oxygen content in niobium hydride powder, for example, there is a method of preventing an increase in temperature during the grinding.

JP 2003-003204 A discloses a method of improving LC characteristics by holding down the oxygen content, which method uses zirconia or niobium beads at grinding temperatures ranging from -200 to 30°C.

However, when niobium powder having a preferable average particle size as niobium powder for a capacitor, of 0.6 µm or less, is to be produced by the method, viscosity of slurry of a dispersion medium containing the niobium powder is increased, which leads to longer grinding time period. For preventing a high viscosity, it may be possible to reduce the concentration of slurry, however, it may lead to a decrease in throughput and further cause the grinding time to be longer. Furthermore, for reducing the oxygen content to a low level, the shorter the grinding time, the more advantageous.

Furthermore, the increased viscosity causes an increase in inner pressure of the grinder, causing secondary aggregation of niobium powder. Therefore, the ultimate average particle size may be limited up to 0.6 µm in a practical grinding time period.

Those facts are true in a case of powder of a niobiumhydride alloy.

US 2003/089197 A1 discloses a method for producing niobium powder for capacitor, wherein niobium hydride powder is wet ground using zirconia beads in water to obtain a slurry, which is subsequently dried into fine powder.

JP 2003 003204 A discloses a method for producing niobium powder for capacitor, wherein niobium hydride powder is wet ground and subsequently dried into fine powder.

JP 2003 299977 A discloses the use of nitrided Nb beads as media in the preparation of Nb powders by ball milling.

### DISCLOSURE OF THE INVENTION

An object of the present invention is to provide a production method of niobium powder for a capacitor having a small oxygen content, a large capacitance per unit mass and a small leakage current and narrow in variation, which can be efficiently ground to an average particle size of less than 0. 6 µm within a short time by preventing an increase in viscosity of slurry accompanied by conventional pulverization method of niobium using a grinding aid.

The present inventors have found out that, as a result of concentrated study on the above problems in the prior art, the above problems can be solved by grinding niobium hydride powder or niobium hydride alloy powder with a grinding aid having a density of 2 to 3.6 g/cm³ and a fracture toughness value of 1.5 MPa·m^{1/2} or more, such as beads made of silicon nitride or a compound containing silicon nitride to thereby prevent an increase in viscosity of slurry.

In other words, the present invention consists of the following items:
(1) A production method of niobium powder, niobium alloy powder, niobium hydride powder or niobium hydride alloy powder for a capacitor, including a step of grinding niobium hydride or an alloy of niobium hydride in the presence of water used as a dispersion medium using as a grinding aid a material having a density of 2 to 3.6 g/cm³, a fracture toughness value of 1.5 MPa·m^{1/2} or more, in which the grinding aid used is at least one compound selected from the group consisting of metal nitrides, metal carbides and metal borides, or the grinding aid is silicon nitride or a compound containing silicon nitride.
(2) The production method of niobium powder, niobium alloy powder, niobium hydride powder or niobium hydride alloy powder for a capacitor according to (1), wherein the niobium hydride or the alloy of niobium hydride is ground at a temperature range of -200 °C to 30 °C in the presence of a dispersion medium.
(3) The production method of niobium powder, niobium alloy powder, niobium hydride powder or niobium hydride alloy powder for a capacitor according to (1), wherein the viscosity of slurry consisting of niobium hydride or niobium hydride alloy and a dispersion medium when the niobium hydride or the alloy of niobium hydride has an average particle size of 1 µm during the grinding is 0.03 Pa·s or less at 20 °C.
(4) The production method of niobium powder, niobium alloy powder, niobium hydride powder or niobium hydride alloy powder for a capacitor according to (1), wherein the thixotropic index of the slurry consisting of niobium hydride or niobium hydride alloy and a dispersion medium is 0.8 or less at 20°C upon completion of the grinding.
(5) The production method of niobium powder, niobium alloy powder, niobium hydride powder or niobium hydride alloy powder for a capacitor according to any one of (1) to (4), further including the step of dehydrogenating the niobium hydride powder or niobium hydride alloy powder at temperatures of 100 to 1,000 °C after the grinding step.
(6) The production method of niobium powder, niobium alloy powder, niobium hydride powder or niobium hydride alloy powder for a capacitor according to any one of (1) to (5), wherein the niobium hydride powder or niobium hydride alloy is ground until the average particle size becomes 0.6 µm or less.

### BEST MODE FOR CARRYING OUT THE INVENTION

The grinder used in the present invention is a grinder which uses a grinding aid. Examples thereof include a bead mill.

Materials to be used for the grinding aid include those having their respective densities of 2 to 3.6 g/cm², preferably 2.5 to 3.5 g/cm³, further preferably 3 to 3.4 g/cm³ and their respective fracture toughness values of 1.5 MPa·m^{1/2} or more, preferably 2.5 MPa·m^{1/2} or more, further preferably 3 MPa·m^{1/2} or more. The material is metal nitride, metal carbide or metal boride, or preferably a compound containing one or more of them, further silicon nitride or a compound containing silicon nitride.

When the density of the grinding aid is too low, it will move along the flow direction of the slurry in the grinder without collision or contact between the components of the grinding aid, whereby grinding efficiency is decreased. Too high a density of the grinding aid tends to cause settling of the beads in the grinder and disproportionate wear of the grinder.

Too low a fracture toughness value of the grinding aid tend to lead to cracking or chipping of the grinding aid, thereby causing an increase in the amount of the grinding aid mixed into a product.

Examples of metals for the metal nitride, metal carbide, or metal boride include elements except nonmetal elements: hydrogen, nitrogen, oxygen, fluorine, neon, sulfur, chlorine, argon, bromine, krypton, iodine, xenon, and radon.

Examples of the compound containing silicon nitride include solid solutions such as sialon or complex sialon (Si₃N₄-AlN-Al₂O₃, Si₃N₄-Y₂O₃-AlN, α'-/β'-complex sialon, Si₃N₄-BeO-Be₃N₂) in which nitrogen is substituted with oxygen or silicon is substituted with aluminum, yttrium or beryllium.

The viscosity of slurry used for the grinding in the present invention is preferably adjusted to 0.03 Pa·s or less, more preferably 0.025 Pa·s or less, even more preferably 0.020 Pa·s or less, as measured at 20 °C when ground up to an average particle size of 1 µm. When niobium powder having an average particle size of more than 1 µm is produced, the viscosity of 1-µm powder can be estimated from an extrapolation line obtained by plotting viscosity values against the average particle size.

Preferable thixotropic index of the slurry is 0. 8 or less, more preferably 0.78 or less, even more preferably 0.75 or less at 20°C.

The viscosity of slurry used in the present invention is a value at a rotor's rotation number of 10.0 rpm, which is calculated by plotting viscosity values (vertical axis) measured at 20°C with a B-type viscometer (e.g., Type BM, manufactured by Tokimec, Inc.) against the rotation numbers of a rotor (horizontal axis) on a sheet of double logarithmic plotting paper.

The thixotropic index is a value calculated by the least-squares method and corresponds to the slope of a graph on which viscosity values (vertical axis) are plotted against the rotation numbers of the rotor (horizontal axis) on double logarithmic plotting graph(from JIS Z 8803 and JIS Z 3284).

According to the present invention, the above problems can be resolved by grinding with the use of the grinding aid, and the invention enables efficient production of niobium powder for providing a capacitor having a larger capacitance per unit mass and a smaller leakage current with a smaller range of variation, as compared with the conventional production method. Detailed reasons for those facts are not fully clear but can be considered as follows.

Like the prior art technology, when beads made of a metal or oxide, such as niobium or zirconia beads, are used, the surface of powder in slurry (niobium hydride or niobium hydride alloy + dispersion medium) upon grinding is covered with metal or oxide fine particles generated from the beads. The outermost surface of the powder may be oxide itself, or an oxidized coating layer made of a metal may be formed thereon. Therefore, hydroxyl groups (-OH groups) are formed on the surface of the powder and the surface thereof can be then hydrated with a water molecule.

As the grinding proceeds, the mass of a single particle becomes small. Thus, the hydrogen bond due to hydration becomes superior to inertial force due to stirring of particles, thereby increasing the viscosity of powder. In particular, a significant increase in viscosity can be observed in a region of 0.6 µm or less.

On the other hand, when the nitride, carbide or boride is used for the grinding agent, it is speculated that an increase in viscosity may be small because degree of hydration with a water molecule is lower than in a case using an oxide grinding agent. Since increase in viscosity is small, the grinding can be carried out at a high concentration of slurry, thereby allowing efficient production.

In the presence of water as a dispersion medium, at a temperature range of -200 to 30°C, preferably -50 to 30°C, for example, by grinding the niobium hydride or niobium hydride alloy with the above grinding aid, increase in viscosity of slurry can be small and the grinding time period can be short, whereby niobium hydride powder or niobium hydride alloy powder which enables production of a capacitor having good LC characteristics and a small oxygen content can be prepared. Within the above temperature range, the temperature range that has effects of reducing the oxygen content and obtaining better LC value is preferably as low as possible. However, the grinding at extremely low temperatures will lead to an extremely large grinding equipment, thereby resulting in high cost. Therefore, a temperature range of -40 to 10°C is particularly preferable. It is preferable not to raise the temperature during the grinding to prevent an increase in oxygen content of the ground product. Therefore, it is more preferable to keep the temperature during the grinding within a temperature range of -200 to 30°C or to lower.

An increase in viscosity of slurry is small when the grinding is carried out using the above beads at low temperature. Therefore, an increase in temperature of the slurry due to grinding heat generation is small.

A concentration of the slurry of 20 mass % or more leads to easily obtaining high productivity of a grinder decreases significantly. Furthermore, when the slurry is at a high concentration of 80 mass% or less, the slurry may have low viscosity from the initial stage of the grinding. Therefore, an increase in temperature due to grinding heat generation can be readily prevented, so that the grinding temperature can easily be kept at 30°C or lower. Accordingly, it is preferable to perform grinding with the slurry concentration set to a range from 20 to 80 mass %.

As a dispersion medium, water is used. It is preferable to carry out sufficient deaeration.

Examples of the material of niobium powder, niobium alloy powder, niobium hydride powder or niobium hydride alloy powder for a capacitor include niobium and/or a niobium alloy. Such a material can be hydrogenated and subjected to grinding.

Examples of an alloy component other than niobium in the above niobium alloy include at least one kind selected from the group consisting of lithium, sodium, potassium, rubidium, cesium, francium, beryllium, magnesium, calcium, strontium, barium, radium, scandium, yttrium, lanthanum, cerium, praseodymium, neodymium, samarium, europium, gadolinium, terbium, dysprosium, holmium, erbium, vanadium, tantalum, chromium, molybdenum, tungsten, manganese, rhenium, iron, ruthenium, osmium, cobalt, rhodium, iridium, nickel, palladium, platinum, copper, silver, gold, zinc, cadmium, mercury, boron, aluminum, gallium, indium, thallium, carbon, silicon, germanium, tin, lead, phosphorus, arsenic, antimony, bismuth, selenium, tellurium, polonium, and astatine.

Niobium hydride powder or niobium hydride alloy powder can be prepared by drying a product obtained by grinding the above material using the well-known drying method or the like. Typically, the powder thus obtained has an average particle size of 0.01 to 10 µm, a BET specific surface area of 0.5 to 40 m²/g, a bulk density of 0.5 to 4 g/ml, and a peak pore size of 0.01 to 7 µm. In order to obtain a high capacitance, the average particle size is preferably 0. 01 to 10 µm, morepreferably 0.02 to 5 µm, particularly preferably 0.03 to 2 µm.

A value obtained by dividing the oxygen content (mass%) of the niobium hydride powder or niobium hydride alloy powder obtained as described above by a specific surface area (m²/g) is generally 1.5 %/(m²/g) or less. For attaining a further improvement in LC characteristics, the value obtained by dividing the oxygen content by a specific surface area can be adjusted to be in the range of 0.01 to 0.9 %/ (m²/g) by reducing oxidation as much as possible i.e., for example, by conducting the grinding at a low temperature within a short time. The oxygen content used in the present invention is a value (mass%) measured using EMGA-620W manufactured by Horiba, Ltd. When the slurry is subjected to direct measurement, the oxygen content is represented by a value in terms of dry powder, which is calculated based on the concentration of slurry.

The specific surface area used in the present invention is a value (m²/g) measured using NOVA 1200 from Quantachrome Ltd.

The niobium hydride powder or niobium hydride alloy powder may be directly used in production of a sintered body, or may be dehydrogenated (e.g., at a temperature of 100 to 1, 000°C under reduced pressure) and used as niobium powder or niobium alloy powder. Furthermore, for the purpose of improving the leakage current value of the niobium hydride powder, niobium hydride alloy powder, niobium powder or niobium alloy powder, part of the niobium powder may be subjected to any of the nitriding, boronizing, carbonizing and sulfiding treatments. Any of nitride, boronide, carbide and sulfide thus obtained by nitriding, boronizing, carbonizing or sulfiding treatment may be independently included respectively, or two, three, or four of them may be included in combination. The bonding amount, i.e., the total amount of nitrogen, boron, carbon and sulfur contained therein varies depending on the particle size, the particle shape, kinds of other alloy components and the amount of the other alloy components in each powder. For example, in the powder having an average particle size of about 0.01 to 10 µm, the total amount is more than 0 ppm but not more than 200, 000 ppm. If the total amount exceeds 200, 000 ppm, a high capacitance cannot be obtained. In terms of optimization of LC and capacitance, the total amount is preferably 50 to 100,000 ppm and particularly preferably 200 to 20,000 ppm.

Niobium powder or niobium alloy powder obtained by dehydrogenating the niobium hydride powder, niobium hydride alloy powder or hydride for a capacitor may be used after granulation into an appropriate shape, or the powder after the granulation may be used in combination with an appropriate amount of ungranulated niobium powder.

As a granulation method, for example, there is a method where an ungranulated niobium powder is left alone under highly reduced pressure, heated up to an appropriate temperature and crushed or a method where an appropriate binder such as camphor, polyacrylic acid, polymethyl acrylate or polyvinyl alcohol and a solvent such as acetone, an alcohol, an acetic ester or water are mixed with ungranulated or granulated niobium powder and the mixture is crushed. These methods may be also favorably used in case of niobium hydride powder, niobium powder, niobium hydride alloy powder, niobium alloy powder or a granulated product thereof.

The thus obtained granulated product has an improved property for pressure molding to produce a sintered body. In this case, preferably, the granulated product may have an average particle size of 10 to 500 µm. If the average particle size of the granulated product is less than 10 µm, partial blocking may occur, thereby reducing fluidity to be poured into a die. If the average particle size is more than 500 µm, the resulting molded product after the pressure-forming tends to get chipped. Furthermore, for the purpose of facilitating the impregnation of a cathode material after the sintering step in production of a capacitor, it is particularly preferable that the granulated product may have an average particle size of 30 to 250 µm. In general, the granulated product thus obtained has a BET specific surface area of 0.5 to 40 m²/g, a bulk density of 0.5 to 4 g/ml, a peak pore size of 0.01 to 500 µm and an oxygen content of 5 mass % or less.

The niobium sintered body or niobium alloy sintered body for a capacitor can be produced by sintering the above powder or the above granulated product. The method of producing a sintered body is not particularly limited. For instance, a method of producing a sintered body may be a method in which a lead wire having an appropriate shape and a length, made of a valve-action metal such as niobium or tantalum, is prepared and then the above powder or the above granulated product is molded integrally with the lead wire such that part of the lead wire is incorporated into the inside of the molded product, that is, the sintered body is designed to have the lead wire as a leading line of the sintered body. The above powder or the above granulated product is pressure-molded into a predetermined shape and then heated at a temperature of 500 to 2, 000°C, preferably 900 to 1, 600°C, further preferably 900 to 1,300°C for 1 minute to 10 hours at 10⁻⁵ to 10² Pa, thereby obtaining a niobium sintered body or niobium alloy sintered body for a capacitor.

A capacitor can be produced from the above sintered body provided as one electrode and a dielectric material present between above sintered body and the other electrode. Here, as a preferable example of dielectric material for the capacitor, a dielectric material mainly composed of niobium oxide can be mentioned. Such a dielectric material mainly composed of niobium oxide can be obtained by, for example, subjecting a sintered body serving as one electrode to chemical formation in an electrolyte solution. In the chemical formation of the sintered body electrode in an electrolyte solution, generally an aqueous proton acid solution, such as an aqueous 0.1 mass% phosphoric acid solution, an aqueous sulfuric acid solution, an aqueous 1 mass% acetic acid solution or an aqueous adipic acid solution, is used. When the sintered body electrode is subjected to chemical formation in an electrolyte solution to obtain a niobium oxide dielectric material, the capacitor is provided as an electrolytic capacitor and the sintered body electrode serves as an anode.

In the capacitor, for example, the other electrode (opposite electrode) of the sintered body may be, but not specifically limited to, at least one material (compound) selected from electrolytic solutions, organic semiconductors and inorganic semiconductors, which are well known in the field of an aluminum electrolytic capacitor.

Specific examples of the electrolytic solution include: a mixture solution of dimethyl formamide and ethylene glycol in which 5 mass% of isobutyltripropyl ammonium borotetrafluoride electrolyte is dissolved; and a mixture solution of propylene carbonate and ethylene glycol in which 7 mass% of tetraethyl ammonium borotetrafluoride is dissolved.

Specific examples of the organic semiconductor include an organic semiconductor comprising benzopyrroline tetramer and chloranil, an organic semiconductor mainly comprising tetrathiotetracene, an organic semiconductor mainly comprising tetracyanoquinodimethane, and an electrically conducting polymer containing a repeating unit represented by formula (1) or (2):

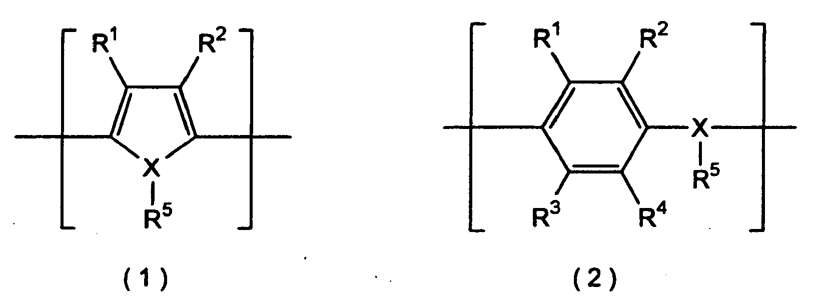

In the formula, R¹ to R⁴ each independently represents a monovalent group selected from a hydrogen atom, a linear or branched, saturated or unsaturated alkyl, alkoxy or alkyl ester group having from 1 to 10 carbon atoms, a halogen atom, a nitro group, a cyano group, a primary, secondary or tertiary amino group, a CF₃ group, a phenyl group and a substitutedphenyl group; the hydrocarbon chains of R¹ and R² or of R³ and R⁴ may combine with each other at an arbitrary position to form a divalent group for forming at least one 3-, 4-, 5-, 6- or 7-membered saturated or unsaturated hydrocarbon cyclic structure together with the carbon atoms to which those groups are substituted; the cyclic combined chain may contain, at an arbitrary position thereof, a carbonyl bond, an ether bond, an ester bond, an amido bond, a sulfide bond, a sulfinyl bond, a sulfonyl bond or an imino bond; X represents an oxygen atom, a sulfur atom or a nitrogen atom; and R⁵ is present only when X is a nitrogen atom, and independently represents a hydrogen atom or a linear or branched, saturated or unsaturated alkyl group having from 1 to 10 carbon atoms.

R¹ to R⁴ in formulae (1) and (2) each independently represents preferably a hydrogen atom or a linear or branched, saturated or unsaturated alkyl or alkoxy group having from 1 to 6 carbon atoms, and each of the pairs R¹ and R², and R³ and R⁴ may combine with each other to form a ring.

Moreover, examples of the electrically conducting polymer containing a repeating unit represented by formula (1) include an electrically conducting polymer containing the structural unit represented by formula (3) as a repeating unit:

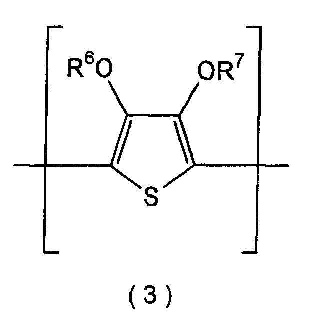

In the formula, R⁶ and R⁷ each independently represents a hydrogen atom, a linear or branched, saturated or unsaturated alkyl group having from 1 to 6 carbon atoms, or a substituent for forming at least one 5-, 6- or 7-membered saturated hydrocarbon cyclic structure containing two oxygen elements when the alkyl groups are combined with each other at an arbitrary position; and the cyclic structure includes a structure having a vinylene bond which may be substituted, and a phenylene structure which may be substituted.

The electrically conducting polymer containing such a chemical structure is charged and doped with a dopant. For the dopant, known dopants can be used without limitation. Specific examples of the inorganic semiconductor include an inorganic semiconductor mainly comprising lead dioxide or manganese dioxide, and an inorganic semiconductor comprising triiron tetroxide. These semiconductors may be used individually or in combination of two or more thereof.

Examples of the polymer containing a repeating unit represented by formula (1) or (2) include polyaniline, polyoxyphenylene, polyphenylene sulfide, polythiophene, polyfuran, polypyrrole, polymethylpyrrole, and substitution derivatives and copolymers thereof. Among these, preferred are polypyrrole, polythiophene and substitution derivatives thereof (e.g., poly(3,4-ethylenedioxythiophene)).

When the organic or inorganic semiconductor used has an electric conductivity of 10⁻² to 10³ S/cm, the capacitor produced can be more reduced in the impedance value and more increased in the capacitance at a high frequency.

The electrically conducting polymer layer is produced, for example, by a method of polymerizing a polymerizable compound such as aniline, thiophene, furan, pyrrole, methylpyrrole or a substitution derivative thereof, under the action of an oxidizing agent capable of causing a satisfactory oxidation reaction of dehydrogenative 2 electron oxidation. The polymerization reaction from a polymerizable compound (monomer) includes, for example, vapor phase polymerization and solution polymerization of the monomer, and the polymer is formed on the surface of the niobium sintered body having thereon a dielectric material. In the case where the electrically conducting polymer is soluble in an organic solvent and can be used in solution coating, a method of coating the surface with the solution is employed.

One preferred example of the production method by solution polymerization is a method of immersing a niobium sintered body having formed thereon a dielectric layer in a solution containing an oxidizing agent (Solution 1) and then immersing the sintered body in a solution containing the monomer and a dopant (Solution 2), thereby causing polymerization to form an electrically conducting polymer layer on the surface. The sintered body may be dipped in Solution 2 and then in Solution 1. Also, Solution 2 may be a monomer solution not containing a dopant. In the case of using a dopant, the dopant may be rendered to coexist in the solution containing an oxidizing agent. This procedure including these steps for polymerization is repeated once or more, preferably from 3 to 20 times, for the niobium sintered body having thereon a dielectric material, whereby a dense and electrically conducting polymer layer can be easily formed in laminae.

Any oxidizing agent may be used in the production method of a capacitor as long as the oxidizing agent does not adversely affect the capacitor performance and as long as the reductant of the oxidizing agent works out to a dopant and enhances the electric conductivity of the electrically conducting polymer. A compound which is industrially inexpensive and easily handleable in the production process is preferred.

Specific examples of such an oxidizing agent include Fe(III) compounds such as FeCl₃, FeClO₄ and Fe (organic acid anion) salt, anhydrous aluminum chloride/cuprous chloride, alkali metal persulfates, ammonium persulfates, peroxides, manganeses such as potassium permanganate, quinones such as 2,3-dichloro-5,6-dicyano-1,4-benzoquinone (DDQ), tetrachloro-1,4-benzoquinone and tetracyano-1,4-benzoquinone, halogens such as iodine and bromine, peracid, sulfuric acid, fuming sulfuric acid, sulfur trioxide, sulfonic acids such as chlorosulfuric acid, fluorosulfuric acid and amidosulfuric acid, ozone, and combinations of a plurality of these oxidizing agents.

Examples of the base compound for the organic acid anion constituting the Fe (organic acid anion) salt include an organosulfonic acid, an organocarboxylic acid, an organophosphoric acid and an organoboric acid. Specific examples of the organosulfonic acid include benzenesulfonic acid, p-toluenesulfonic acid, methanesulfonic acid, ethanesulfonic acid, α-sulfonaphthalene, β-sulfonaphthalene, naphthalenedisulfonic acid and alkylnaphthalenesulfonic acid (examples of the alkyl group include butyl, triisopropyl and di-tert-butyl).

Specific examples of the organocarboxylic acid include acetic acid, propionic acid, benzoic acid and oxalic acid. Furthermore, a polyelectrolyte anion such as polyacrylic acid, polymethacrylic acid, polystyrenesulfonic acid, polyvinylsulfonic acid, polyvinylsulfuric acid, poly-α-methylsulfonic acid, polyethylenesulfonic acid and polyphosphoric acid may also be used. However, these are set forth only for the purpose of illustrating examples of the organosulfonic acid and the organocarboxylic acid. Examples of the counter cation of the above-described anion include, but are not limited to, H⁺, alkali metal ion such as Na⁺ and K⁺, and ammonium ion substituted by a hydrogen atom, a tetramethyl group, a tetraethyl group, a tetrabutyl group or a tetraphenyl group. Among these oxidizing agents, preferred are oxidizing agents containing a trivalent Fe compound, cuprous chloride, an alkali persulfate, an ammonium persulfate or a quinone.

As for the anion (other than the reductant anion of the oxidizing agent) having a dopant ability which is allowed to coexist, if desired, in the process of producing a polymer composition of the electrically conducting polymer, an electrolyte anion having, as a counter anion, an oxidizing agent anion (a reductant of the oxidizing agent) produced from the above-described oxidizing agent, or another electrolyte anion may be used. Specific examples thereof include halide anion of Group 5B elements, such as PF₆⁻, SbF₆⁻ and AsF₆⁻, halide anion of Group 3B elements, such as BF₄⁻, halogen anion such as I⁻ (I₃⁻), Br⁻ and Cl⁻, perhalogenate anion such as ClO₄⁻, Lewis acid anion such as AlCl₄⁻, FeCl₄⁻ and SnCl₅⁻, and protonic acid anion including inorganic acid anion such as NO₃⁻ and SO₄²⁻, sulfonate anion such as p-toluenesulfonic acid, naphthalenesulfonic acid and naphthalenesulfonic acid substituted by an alkyl group having from 1 to 5 carbon atoms, organosulfonate anion such as CF₃SO₃⁻ and CH₃SO₃⁻, and carboxylate anion such as CH₃COO⁻ and C₆H₅COO⁻.

Other examples include polyelectrolyte anion such as polyacrylic acid, polymethacrylic acid, polystyrenesulfonic acid, polyvinylsulfonic acid, polyvinylsulfuric acid, poly-α-methylsulfonic acid, polyethylenesulfonic acid and polyphosphoric acid. The anion is preferably a polymer or low molecular organosulfonic acid compound anion or a polyphosphoric acid compound anion, and an aromatic sulfonic acid compound (e.g., sodium dodecylbenzenesulfonate, sodium naphthalenesulfonate) is preferably used as the anion-donating compound.

Among the organosulfonate anions, more effective dopants are a sulfoquinone compound having one or more sulfo-anion group (-SO₃⁻) and a quinone structure within the molecule, and an anthracenesulfonate anion.

Examples of the basic skeleton for the sulfoquinone anion in the sulfoquinone compound include p-benzoquinone, o-benzoquinone, 1,2-naphthoquinone, 1,4-naphthoquinone, 2,6-naphthoquinone, 9,10-anthraquinone, 1,4-anthraquinone, 1,2-anthraquinone, 1,4-chrysenequinone, 5,6-chrysenequinone, 6,12-chrysenequinone, acenaphthoquinone, acenaphthenequinone, camphorquinone, 2,3-bornanedione, 9,10-phenanthrenequinone and 2,7-pyrenequinone. In the case where the other electrode (counter electrode) is solid, an electrically conducting layer may be provided thereon so as to attain good electric contact with an exterior outgoing lead (for example, lead frame), if desired.

The electrically conducting layer can be formed, for example, by solidification of an electrically conducting paste, plating, vapor deposition of metal, or lamination of heat-resistant electrically conducting resin film. Preferred examples of the electrically conducting paste include silver paste, copper paste, aluminum paste, carbon paste and nickel paste, and these may be used individually or in combination of two or more thereof. In the case of using two or more pastes, the pastes may be mixed or may be superposed one on another as separate layers. The electrically conducting paste applied is then solidified by being left standing in air or by heating. Examples of the plating include nickel plating, copper plating, silver plating and aluminum plating. Examples of the metal vapor-deposited include aluminum, nickel, copper and silver.

More specifically, for example, an aluminum paste and a silver paste are stacked in this order on the second electrode and these are sealed with a material such as epoxy resin, whereby a capacitor is fabricated. This capacitor may have a niobium or tantalum lead which is sintered and shaped integrally with the niobium sintered body or welded afterward.

The thus-fabricated capacitor is jacketed by using, for example, resin mold, resin case, metallic jacket case, dipping of resin, or laminate film and then used as a capacitor product for various uses.

In the case where the counter electrode is liquid, the capacitor constituted by those two electrodes and dielectric material is housed, for example, in a can electrically connected to the counter electrode, thereby completing the capacitor. In this case, the electrode side of the niobium sintered body is guided outside through a niobium or tantalum lead described above and at the same time, insulated from the can by using an insulating rubber or the like.

In view of the above, a sintered body for a capacitor can be produced using any one of the niobium hydride powder, niobium hydride alloy powder, niobium powder, niobium alloy powder, and the granulated products thereof produced in accordance with the embodiments as described above and then a capacitor can be produced using such a sintered body, thereby obtaining the capacitor having a small leakage current value and good reliability.

### BRIEF DESCRIPTION OF THE DRAWINGS

Fig. 1 shows variations in average particle size during the grinding in Example 1, Comparative Example 1, and Comparative Example 3.
Fig. 2 shows variations in viscosity of slurry with respect to average particle size during the grinding in Example 1, Comparative Example 1, and Comparative Example 3.

### BEST MODE FOR CARRYING OUT THE INVENTION

Hereinafter, the present invention will be described specifically with reference to examples and comparative examples. Furthermore, in each of the examples, the capacitance and leakage current value of a sintered body prepared from the above powder or granulated product having desired physical properties (hereinafter, abbreviated as "niobium sintered body", "niobium alloy sintered body", or simply "sintered body") and the capacitance and leakage current value of a capacitor processed into a chip were measured by the following methods.
(1) For determining the capacitance of a sintered body, at room temperature, the sintered body, on which a dielectric material layer was formed, and an electrode made of a tantalum material were dipped into 30 mass% of sulfuric acid and each of them was then connected to a measuring apparatus (Precision LCR meter, type HP4284A) manufactured by Hewlett-Packard Co., Ltd. to measure the capacitance thereof at 120 Hz. The measurement value per mass of the sintered body was designated as a capacitance of the sintered body (unit: µF·V/g).
(2) In measurement of leakage current of a sintered body, a sintered body on which a dielectric material layer was formed as a positive electrode and a negative electrode were dipped into a 20-mass% aqueous phosphoric acid solution at room temperature and a direct current of 14 V was then continuously applied thereon for 3 minutes, followed by measuring the current value. The measurement value per mass of the sintered body was designated as a leakage current value of the sintered body (LC value, unit: µA/g).
(3) For determining the capacitance of a capacitor, at room temperature, an LCR measuring apparatus manufactured by Hewlett-Packard Co., Ltd. was connected between the terminals of a chip prepared and the measurement value of capacitance at 120 Hz was then designated as the capacitance of a capacitor processed into the chip.
(4) For determining the leakage current of a capacitor, at room temperature, a direct voltage of 6.3 V was continuously applied for 1 minute between the terminals of a chip prepared and the measured current value was then designated as the leakage current value of a capacitor processed into the chip.
(5) For particle size determination, using HRA9320-X100 manufactured by Microtrac Co., Ltd., the particle size distribution was measured by a laser diffraction scattering method. A particle size value (D50; µm) when the accumulated volume % corresponded to 50 volume% was designated as the average particle size.

### Example 1:

A niobium ingot (1, 000 g) was placed in a reaction vessel made of SUS 304 and hydrogen was then continuously introduced into the reaction vessel at 400 °C for 10 hours. After the reaction vessel had been cooled down to room temperature, under an argon atmosphere, the niobium hydride mass was coarsely crushed with a hammer crusher, thereby obtaining coarse powder of niobium hydride having a particle size of 0.5 mm or less. Subsequently, silicon nitride beads each having a particle size of 0.5 mm (3.2 g/cm³ in density and 6.0 MPa·m^{1/2} in fracture toughness value) provided as a grinding aid and deaerated pure water provided as a dispersion medium were used to carry out a wet-grinding process until the average particle size of niobium hydride coarse powder reached 0.5 µm with a slurry concentration of 40 mass% while cooling from a grinding temperature of 10°C to 0°C, thereby obtaining water slurryof niobium hydride powder. The viscosity of slurry when the grinding was carried out to 1. 0 µm in average particle size was 0.015 Pa·s and the thixotropic index of slurry after the grinding was 0.65. Under reduced pressure, the slurry was dried at 40 °C, thereby obtaining niobium hydride powder. The powder had an oxygen concentration of 5.8 mass% and a specific surface area of 7.5 m²/g. The resulting niobium hydride powder was subjected to dehydrogenation by heating at 400°C for 4hours at 1 x 10⁻² Pa and then cooled down to room temperature. Under atmospheric pressure, nitrogen was introduced to carry out nitridation at 300°C for 2 hours. The niobium powder thus obtained was sintered at 1, 150°C for 4 hours under a reduced pressure of 4 x 10⁻³ Pa and then cooled down to room temperature. The resulting niobium mass was crushed to obtain niobium granulated powder. The granulated powder had an average particle size of 110 µm, a BET specific surface area of 2.7 m²/g, a pore size distribution peak of 0.32 µm, a bulk density of 1.1 g/cm³ and an oxygen content of 6.2 mass%.

The niobium granulated powder thus obtained was molded together with a niobium wire of 0.3 mm in diameter to prepare a compact (about 0.1 g) with dimensions of about 0.3 cm x 0.18 cm x 0.45 cm. Subsequently, the compact was left to stand at 1,250°C for 30 minutes under a reduced pressure of 4 x 10⁻³ Pa, thereby obtaining a sintered body. The sintered body thus obtained was subjected to a chemical conversion treatment in a 0.1-mass% aqueous phosphoric acid solution at 80°C for 6 hours at a voltage of 20 V to form a dielectric material layer on the surface of the sintered body. After that, the capacitance in 30-mass% sulfuric acid and the leakage current in a 20-mass% aqueous phosphoric acid solution were measured, respectively. The results thereof are represented in Table 1.

### Examples 2 to 6 (Examples 2 to 5 reference only):

Niobiumpowder was prepared in the same manner as in Example 1 with variations of dispersion medium, temperature upon grinding, and slurry concentration, followed by preparing granulated powder.

The niobium granulated powder thus obtained was molded together with a niobium wire having a diameter of 0.3 mm to prepare a compact (about 0.1 g) with dimensions of about 0.3 cm x 0.18 cm x 0.45 cm. Next, the compact was left standing at 1,250°C for 30 minutes under a reduced pressure of 4 x 10⁻³ Pa, thereby obtaining a sintered body. The sintered body thus obtained was subjected to a chemical conversion treatment in a 0.1-mass% aqueous phosphoric acid solution at 80°C for 6 hours at a voltage of 20 V, thereby forming a dielectric material layer on the surface of the sintered body. After that, the capacitance in 30-mass% sulfuric acid and the leakage current in a 20-mass% aqueous phosphoric acid solution were measured, respectively. The results thereof are represented in Table 1.

### Example 7:

Niobium hydride coarse powder was subjected to a wet-grinding process until its average particle size reached 0.4 µm in the same manner as in Example 1, thereby obtaining water slurry of niobium hydride powder. Drying was carried out at 40°C under reduced pressure to obtain niobium hydride powder. The powder had an oxygen concentration of 9. 9 mass% and a specific surface area of 13.03 m²/g. The niobium hydride powder thus obtained wad dehydrogenated at 400°C for 4 hours at 1 x 10⁻² Pa, followed by cooling down to room temperature. Under atmospheric pressure, nitrogen was introduced to carry out nitridation at 300°C for 2 hours. The niobium powder thus obtained was sintered at 1,150°C for 4 hours under a reduced pressure of 4 x 10⁻³ Pa, followed by cooling down to room temperature. The resulting niobium mass was crushed to obtain niobium granulated powder. The granulated powder had an average particle size of 105 µm a BET specific surface area of 4. 6 m²/g, a pore size distribution peak of 0.29 µm, a bulk density of 0.9 g/cm³ and an oxygen concentration of 10.1 mass%.

The capacitance and leakage current value of the resulting niobium granulated powder were measured in the same manner as in Example 1. The results are represented in Table 1.

### Example 8:

Niobium hydride coarse powder was subjected to a wet-grinding process until its average particle size reached 0.3 µm in the same manner as in Example 1, thereby obtaining water slurry of niobium hydride powder. Drying was carried out at 40°C under reduced pressure to obtain niobium hydride powder. The powder had an oxygen concentration of 12.4 mass% and a specific surface area of 16.52 m²/g. The niobium hydride powder thus obtained wad dehydrogenated at 400°C for 4 hours at 1 x 10⁻² Pa, followed by cooling down to room temperature. Under atmospheric pressure, nitrogen was introduced to carry out nitridation at 300°C for 2 hours. The niobium powder thus obtained was sintered at 1,150°C for 4 hours under a reduced pressure of 4 x 10⁻³ Pa, followed by cooling down to room temperature. The resulting niobium mass was crushed to obtain niobium granulated powder. The granulated powder had an average particle size of 108 µm, a BET specific surface area of 6.6 m²/g, a pore size distribution peak of 0.27 µm, a bulk density of 0.8 g/cm³ and an oxygen concentration of 12.9 mass%.

The capacitance and leakage current value of the resulting niobium granulated powder were measured in the same manner as in Example 1. The results are represented in Table 1.

### Examples 9 to 19:

Each of various niobium alloy ingots (1, 000 g) was placed in a reaction vessel made of SUS 304 and hydrogen was then continuously introduced into the reaction vessel at 400°C for 10 hours. After the reaction vessel had been cooled down to room temperature, under an argon atmosphere, the niobium alloy hydride mass was coarsely crushed with a hammer crusher, thereby obtaining coarse powder having a particle size of 0.5 mm or less. Subsequently, silicon nitride beads each having a particle size of 0. 5 mm provided as a grinding aid and deaerated pure water provided as a dispersion medium were used to carry out a wet-grinding process until the average particle size of niobium alloy hydride coarse powder reached 0.5 µm with a slurry concentration of 40 mass% while cooling from a grinding temperature of 10°C to 0°C, thereby obtaining water slurry of niobium hydride alloy powder. Under reduced pressure, the slurry was dried at 40°C, thereby obtaining niobium hydride alloy powder.

The resulting niobium hydride alloy powder was subjected to dehydrogenation by heating at 400°C for 4hours at 1 x 10⁻² Pa, sintered at 1,150°C for 4 hours under a reduced pressure of 4 x 10⁻³ Pa, and then cooled down to room temperature. The resulting niobium alloy mass was crushed to obtain niobium alloy granulated powder.

The niobium granulated powder thus obtained was molded together with a niobium wire of 0.3 mm in diameter to prepare a compact (about 0.1 g) with dimensions of about 0.3 cm x 0.18 cm x 0.45 cm.

Subsequently, the compact was left to stand at 1,250°C for 30 minutes under a reduced pressure of 4 x 10⁻³ Pa, thereby obtaining a sintered body. The sintered body thus obtained was subjected to a chemical conversion treatment in a 0.1-mass% aqueous phosphoric acid solution at 80°C for 6 hours at a voltage of 20 V to form a dielectric material layer on the surface of the sintered body. After that, the capacitance in 30-mass% sulfuric acid and the leakage current in a 20-mass% aqueous phosphoric acid solution were measured, respectively. The results thereof are represented in Table 1.

### Comparative Example 1:

A niobium ingot (1, 000 g) was placed in a reaction vessel made of SUS 304 and hydrogen was then continuously introduced into the reaction vessel at 400°C for 10 hours. After the reaction vessel had been cooled down to room temperature, under an argon atmosphere, the niobium hydride mass was coarsely crushed with a hammer crusher, thereby obtaining coarse powder having a particle size of 0.5 mm or less. Subsequently, zirconia beads each having a particle size of 0.5 mm (6.0 g/cm³ in density and 6.0 MPa·m^{1/2} in fracture toughness value) provided as a grinding aid and deaerated pure water provided as a dispersion medium were used to carry out a wet-grinding process until the average particle size of niobium hydride coarse powder reached 0.6 µm while cooling from a grinding temperature of 10°C by means of the same cooling device as that of Example 1, thereby obtaining water slurry of niobium hydride powder. The viscosity of slurry when the grinding was carried out to 1.0 µm in average particle size was 0.047 Pa·s and the thixotropic index of slurry after the grinding was 0.83. Under reduced pressure, the slurry was dried at 40°C, thereby obtaining niobium hydride powder. The powder had an oxygen concentration of 6.3 mass%. The resulting niobium hydride powder was subjected to dehydrogenation by heating at 400°C for 4hours at 1 x 10⁻² Pa and then cooled down to room temperature. Under atmospheric pressure, nitrogen was introduced to carry out nitridation at 300°C for 2 hours. The niobium powder thus obtained was sintered at 1,100°C for 2 hours under a reduced pressure of 4 x 10⁻³ Pa and then cooled down to room temperature. The resulting niobium mass was crushed to obtain niobium granulated powder. The granulated powder had an average particle size of 110 µm, a BET specific surface area of 2.2 m²/g, a pore size distribution peak of 0. 33 µm, a bulk density of 1.0 g/cm³ and an oxygen content of 6.8 mass%.

The niobium granulated powder thus obtained was molded together with a niobium wire of 0.3 mm in diameter to prepare a compact (about 0.1 g) with dimensions of about 0.3 cm x 0.18 cm x 0.45 cm. Subsequently, the compact was left to stand at 1,250°C for 30 minutes under a reduced pressure of 4 x 10⁻³ Pa, thereby obtaining a sintered body. The sintered body thus obtained was subjected to a chemical conversion treatment in a 0.1-mass% aqueous phosphoric acid solution at 80°C for 6 hours at a voltage of 20 V to form a dielectric material layer on the surface of the sintered body. After that, the capacitance in 30-mass% sulfuric acid and the leakage current in a 20-mass% aqueous phosphoric acid solution were measured, respectively. The results thereof are represented in Table 1.

### Comparative Example 2:

A sintered body was prepared and evaluated in the same manner as in Example 6 except that zirconia beads of 0.5 mm in particle size was used as a grinding aid.

### Comparative Example 3

A sintered body was prepared and evaluated in the same manner as in Example 1 except that niobium beads of 0.5 to 1.0 mm in particle size (8.5 g/cm² in density and 6.0 MPa·m^{1/2} or more in fracture toughness value)was used as a grinding aid. The viscosity of slurry when the grinding was carried out to 1. 0 µm in average particle size was 0.037 Pa·s and the thixotropic index of the slurry after the grinding was 0.81.

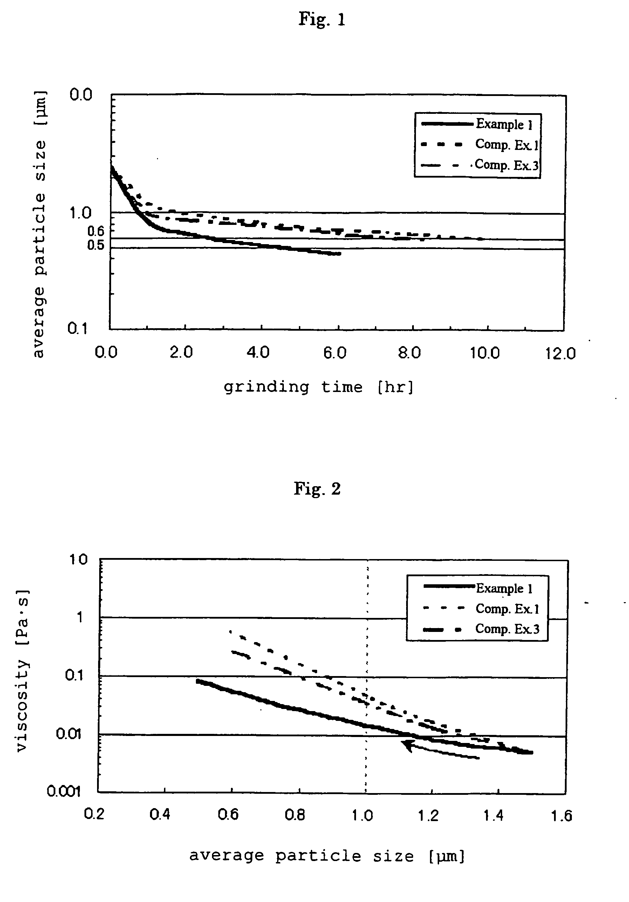

With respect to Example 1, Comparative Example 1, and Comparative Example 3, which had been described above, variations in average particle size upon grinding were shown in Fig. 1, while variations of slurry viscosity against the average particle size were shown in Fig. 2.

As is evident from Fig. 1, it is found that Example 1 can grind to 0.5 µm or less in average particle size within a short time, while Comparative Examples 1 and 3 become difficult to grind at an average particle size of about 0.6 µm. Therefore, it is found that a considerable grinding time is required for making a smaller particle size.

Furthermore, as is evident from Fig. 2, in Example 1, the viscosity is small even if the average particle size decreases. On the other hand, a large increase in viscosity was found in each of Comparative Examples 1 and 3. From the results, it is found that grinding can proceed more easily when a smaller increase in viscosity occurs.

### Examples 20 and 21:

Fifty sintered bodies were prepared with respect to each of Example 20 carried out in the same manner as in Example 1 and Example 21 carried out in the same manner as in Example 7. Each of those sintered bodies was subjected to an electrolytic chemical conversion treatment using a 0.1-mass% aqueous phosphoric acid solution for 200 minutes at a voltage of 20 V, thereby forming an oxidized coating layer of a dielectric material on the surface. Subsequently, the resultant was dipped into a 60-mass% aqueous manganese nitrate solution and heating was then performed at 220°C for 30 minutes in a repetitive manner, thereby forming a manganese dioxide layer as the other electrode layer on the oxidized coating layer of the dielectric material. Subsequently, on that surface, a carbon layer and a silver paste layer were stacked thereon, successively. Next, after a lead frame had been loaded thereon, the whole was sealed by an epoxy resin to prepare a chip-type capacitor. The average of each of the capacitance and LC value of the chip-type capacitor was shown in Table 2 (n = 50). The LC value was one obtained upon application of 6.3 V for 1 minute at room temperature.

### Examples 22 and 23:

Fifty sintered bodies were prepared with respect to each of Example 22 carried out in the same manner as in Example 2 and Example 23 carried out in the same manner as in Example 9. Each of those sintered bodies was subjected to an electrolytic chemical conversion treatment using a 0.1-mass% aqueous phosphoric acid solution for 200 minutes at a voltage of 20 V, thereby forming an oxidized coating layer of a dielectric material on the surface. Next, procedures of allowing the oxidized coating layer of the dielectric material to contact with a mixture solution of equal parts of a 10-mass% aqueous ammonium persulfate solution and a 0.5-mass% anthraquinone sulfonic acid solution and then to touch with pyrrole vapor were repeated at least five times to form the other electrode (opposite electrode) made of polypyrrole.

Subsequently, on that surface, a carbon layer and a silver paste layer were stacked thereon, successively. After a lead frame had been loaded thereon, the whole was sealed by an epoxy resin to prepare a chip-type capacitor. The average of each of the capacitance and LC value of the chip-type capacitor was shown in Table 2 (n = 50). The LC value was one obtained upon application of 6.3 V for 1 minute at room temperature.

### Examples 24 and 25:

Fifty sintered bodies were prepared with respect to each of Example 24 carried out in the same manner as in Example 4 and Example 25 carried out in the same manner as in Example 11. Each of those sintered bodies was subjected to an electrolytic chemical conversion treatment using a 0.1-mass% aqueous phosphoric acid solution for 200 minutes at a voltage of 20 V, thereby forming an oxidized coating layer of a dielectric material on the surface. Next, the sintered body was dipped into an aqueous solution containing 25 mass% of ammonium persulfate (solution 1) and then pulled out, followed by drying at 80°C for 30 minutes. Subsequently, the sinteredbodyprovided with the dielectric material was dipped into an isopropanol solution containing 18 mass% of 3,4-ethylene dioxythiophene (solution 2) and then pulled out, followed by being left to stand in atmosphere at 60°C for 10 minutes to carry out oxidative polymerization. This was dipped again into the solution 1 and then treated by the same way as described above.

The steps from the dipping into the solution 1 to the oxidative polymerization were repeated 8 times. After that, the resultant was washed with 50°C hot water for 10 minutes and dried at 100°C for 30 minutes, thereby forming the other electrode (opposite electrode) made of conductive poly(3,4-ethylene dioxythiophene).

Subsequently, on that surface, a carbon layer and a silver paste layer were stacked thereon, successively. After a lead frame had been loaded thereon, the whole was sealed by an epoxy resin to prepare a chip-type capacitor. The average of each of the capacitance and LC value of the chip-type capacitor was shown in Table 2 (n = 50). The LC value was one obtained upon application of 6.3 V for 1 minute at room temperature.

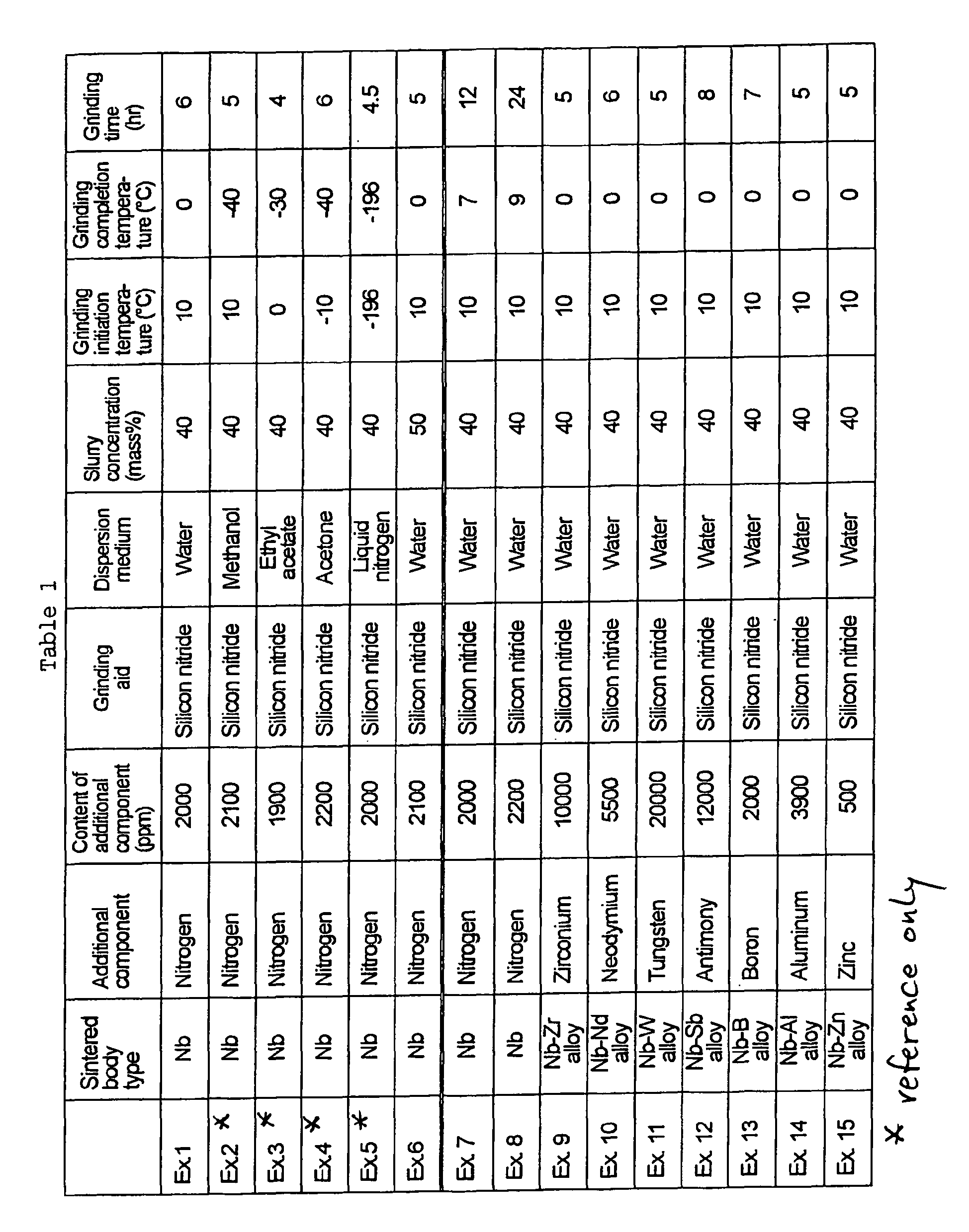

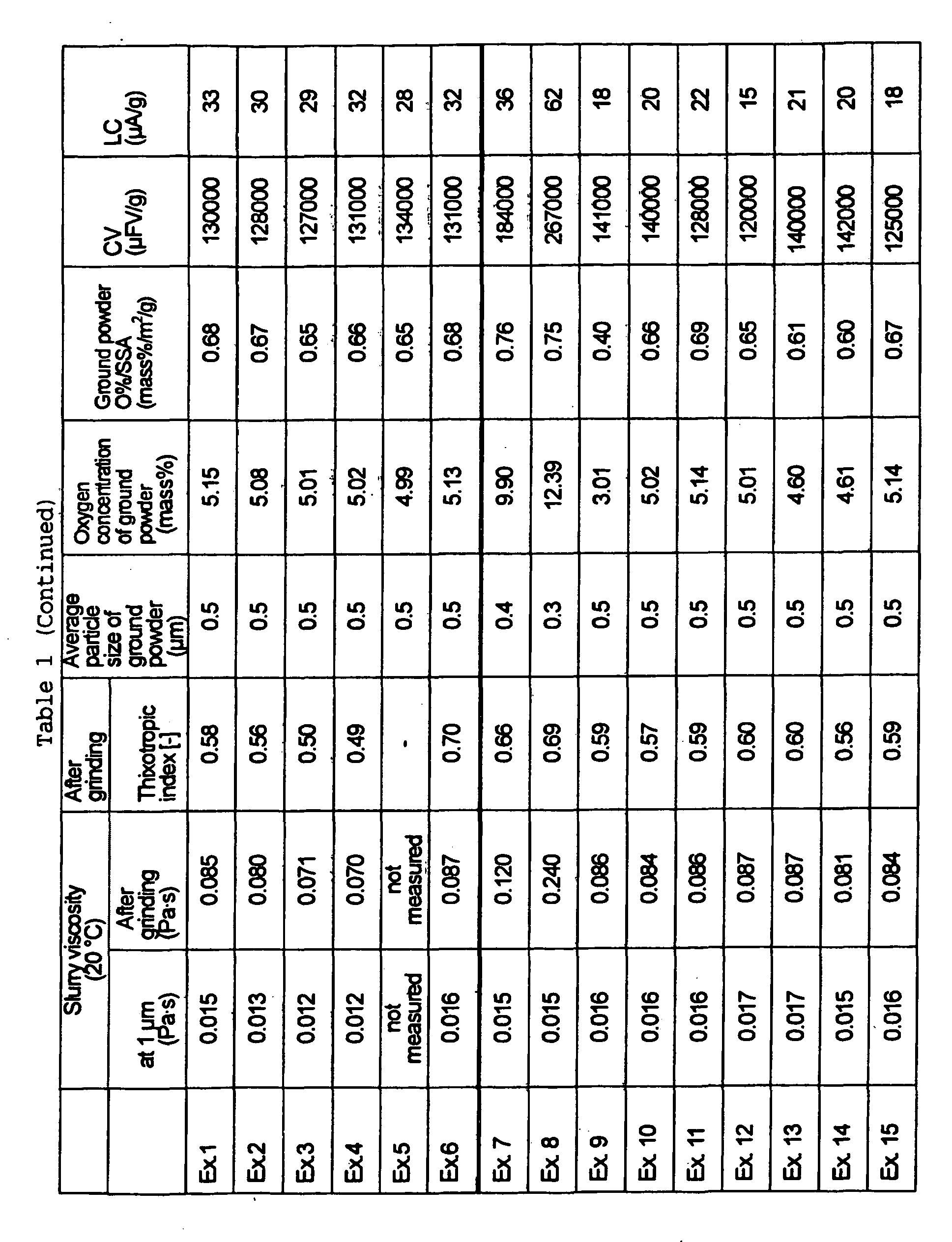

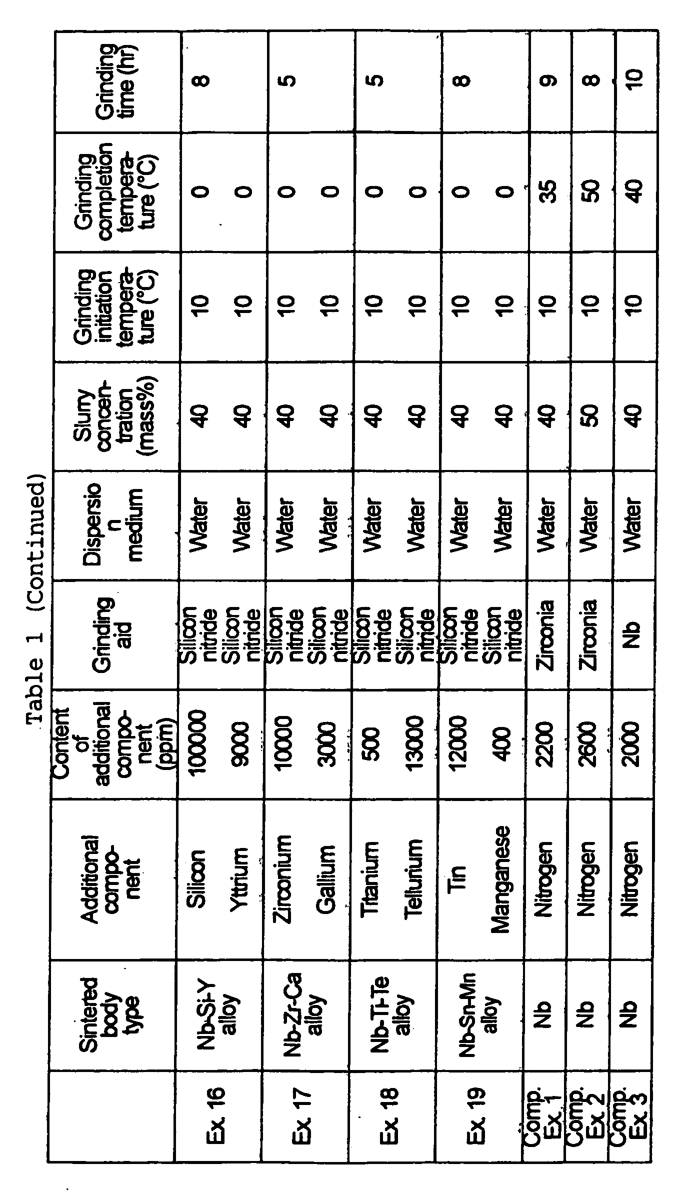

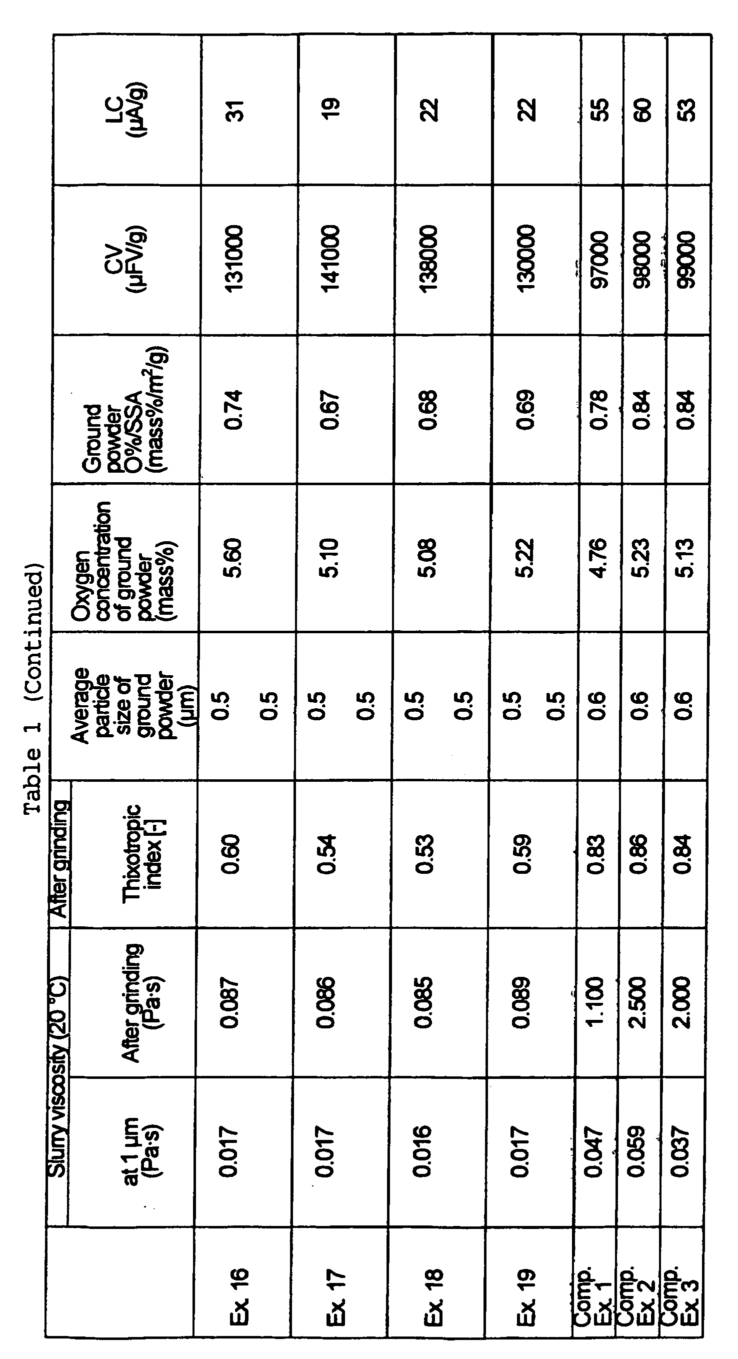

**Table 2**

| | Capacitance (µF) | LC (µA) | Number of capacitors having LC exceeding 100 µA |
|---|---|---|---|
| Example 20 | 680 | 24 | 0 |
| Example 21 | 568 | 17 | 0 |
| Example 22 | 602 | 19 | 0 |
| Example 23 | 632 | 23 | 0 |
| Example 24 | 668 | 20 | 0 |
| Example 25 | 681 | 23 | 0 |

### INDUSTRIAL APPLICABILITY

The present invention provides a method of efficiently producing niobium powder with which a capacitor having a high capacitance per unit mass and good leakage current characteristics can be obtained. According to the present invention, by grinding niobium hydride powder or niobium hydride alloy powder with a grinding aid having a density of 2 to 3.6 g/cm³ and a fracture toughness value of 1. 5 MPa·m^{1/2} or more, such as beads made of silicon nitride or a compound containing silicon nitride, a niobium powder with high capacitance can be efficiently produced.

## Claims

1. A production method of niobium powder, niobium alloy powder, niobiumhydride powder or niobiumhydride alloypowder for a capacitor, including a step of grinding niobium hydride or an alloy of niobium hydride in the presence of water used as a dispersion medium using as a grinding aid a material having a density of 2 to 3.6 g/cm³, a fracture toughness value of 1.5 MPa·m^{1/2} or more,
in which the grinding aid used is at least one compound selected from the group consisting of metal nitrides, metal carbides and metal borides, or
the grinding aid is silicon nitride or a compound containing silicon nitride.

2. The production method of niobium powder, niobium alloy powder, niobium hydride powder or niobiumhydride alloypowder for a capacitor according to claim 1, wherein the niobium hydride or the alloy of niobium hydride is ground at a temperature range of -200 °C to 30 °C in the presence of a dispersion medium.

3. The production method of niobium powder, niobium alloy powder, niobiumhydride powder or niobium hydride alloypowder for a capacitor according to claim 1, wherein the viscosity of slurry consisting of niobium hydride or niobium hydride alloy and a dispersion medium when the niobium hydride or the alloy of niobium hydride has an average particle size of 1 µm during the grinding is 0.03 Pa·s or less at 20 °C.

4. The production method of niobium powder, niobium alloypowder, niobiumhydride powder or niobiumhydride alloypowder for a capacitor according to claim 1, wherein the thixotropic index of the slurry consisting of niobium hydride or niobium hydride alloy and a dispersion medium is 0.8 or less at 20°C upon completion of the grinding.

5. The production method of niobium powder, niobium alloy powder, niobiumhydride powder or niobiumhydride alloypowder for a capacitor according to any one of claims 1 to 4, further including the step of dehydrogenating the niobium hydride powder or niobium hydride alloy powder at temperatures of 100 to 1,000 °C after the grinding step.

6. The production method of niobium powder, niobium alloy powder, niobium hydride powder or niobiumhydride alloy powder for a capacitor according to any one of claims 1 to 5, wherein the niobium hydride powder or niobium hydride alloy is ground until the average particle size becomes 0.6 µm or less.

## Patentansprüche

1. Verfahren zur Herstellung von Niobpulver, Nioblegierungspulver, Niobhydridpulver oder Niobhydridlegierungspulver für einen Kondensator, welches eine Stufe umfasst, in der Niobhydrid oder eine Legierung von Niobhydrid in Anwesenheit von als Dispergiermedium eingesetztem Wasser unter Verwendung eines Materials mit einer Dichte von 2 bis 3,6 g/cm³ und einem Bruchzähigkeitswert von 1,5 MPa·m^{1/2} oder mehr als Mahlhilfsmittel gemahlen wird, wobei das eingesetzte Mahlhilfsmittel mindestens eine Verbindung ist, die aus der Gruppe ausgewählt ist, die aus Metallnitriden, Metallcarbiden und Metallboriden besteht, oder das Mahlhilfsmittel Siliciumnitrid oder eine Siliciumnitrid enthaltende Verbindung ist.

2. Verfahren zur Herstellung von Niobpulver, Nioblegierungspulver, Niobhydridpulver oder Niobhydridlegierungspulver für einen Kondensator nach Anspruch 1, wobei das Niobhydrid oder die Legierung von Niobhydrid in einem Temperaturbereich von -200°C bis 30°C in Anwesenheit eines Dispergiermediums gemahlen wird.

3. Verfahren zur Herstellung von Niobpulver, Nioblegierungspulver, Niobhydridpulver oder Niobhydridlegierungspulver für einen Kondensator nach Anspruch 1, wobei die Viskosität einer Aufschlämmung, die aus Niobhydrid oder Niobhydridlegierung und einem Dispergiermedium besteht, wenn das Niobhydrid oder die Legierung von Niobhydrid eine mittlere Teilchengröße von 1 µm während des Mahlens hat, 0,03 Pa·s oder weniger bei 20°C ist.

4. Verfahren zur Herstellung von Niobpulver, Nioblegierungspulver, Niobhydridpulver oder Niobhydridlegierungspulver für einen Kondensator nach Anspruch 1, wobei der Thixotropie-Index der Aufschlämmung, die aus Niobhydrid oder Niobhydridlegierung und einem Dispergiermedium besteht, bei Abschluß des Mahlvorgangs 0,8 oder weniger bei 20°C ist.

5. Verfahren zur Herstellung von Niobpulver, Nioblegierungspulver, Niobhydridpulver oder Niobhydridlegierungspulver für einen Kondensator nach einem der Ansprüche 1 bis 4, das außerdem die Stufe umfasst, in der das Niobhydridpulver oder Niobhydridlegierungspulver nach der Mahlstufe bei Temperaturen von 100 bis 1000°C dehydriert wird.

6. Verfahren zur Herstellung von Niobpulver, Nioblegierungspulver, Niobhydridpulver oder Niobhydridlegierungspulver für einen Kondensator nach einem der Ansprüche 1 bis 5, wobei das Niobhydridpulver oder die Niobhydridlegierung gemahlen wird, bis die mittlere Teilchengröße 0,6 µm oder weniger wird.

## Revendications

1. Procédé de production de poudre de niobium, de poudre d'alliage de niobium, de poudre d'hydrure de niobium ou de poudre d'alliage d'hydrure de niobium pour un condensateur comprenant une étape de broyage d'hydrure de niobium ou d'un alliage d'hydrure de niobium en présence d'eau utilisée comme milieu de dispersion en utilisant comme auxiliaire de broyage un matériau présentant une densité de 2 à 3,6 g/cm³, une valeur de ténacité à la rupture de 1,5 MPa.m^{1/2} ou supérieure, dans lequel l'auxiliaire de broyage utilisé est au moins un composé choisi dans le groupe constitué de nitrures de métaux, de carbures de métaux et de borures de métaux, ou l'auxiliaire de broyage est le nitrure de silicium ou un composé contenant du nitrure du silicium.

2. Procédé de production de poudre de niobium, de poudre d'alliage de niobium, de poudre d'hydrure de niobium ou de poudre d'alliage d'hydrure de niobium pour un condensateur selon la revendication 1, dans lequel l'hydrure de niobium ou l'alliage d'hydrure de niobium est broyé dans un intervalle de températures de -200°C à 30°C en présence d'un milieu de dispersion.

3. Procédé de production de poudre de niobium, de poudre d'alliage de niobium, de poudre d'hydrure de niobium ou de poudre d'alliage d'hydrure de niobium pour un condensateur selon la revendication 1, dans lequel la viscosité de la suspension constituée d'hydrure de niobium ou d'alliage d'hydrure de niobium et d'un milieu de dispersion, lorsque l'hydrure de niobium ou l'alliage d'hydrure de niobium présente une taille moyenne de particules de 1 µm pendant le broyage, est de 0,03 Pa.s ou inférieure à 20°C.

4. Procédé de production de poudre de niobium, de poudre d'alliage de niobium, de poudre d'hydrure de niobium ou de poudre d'alliage d'hydrure de niobium pour un condensateur selon la revendication 1, dans lequel l'indice thixotrope de la suspension constituée d'hydrure de niobium ou d'alliage d'hydrure de niobium et d'un milieu de dispersion est de 0,8 ou inférieur à 20°C à la fin du broyage.

5. Procédé de production de poudre de niobium, de poudre d'alliage de niobium, de poudre d'hydrure de niobium ou de poudre d'alliage d'hydrure de niobium pour un condensateur selon l'une quelconque des revendications 1 à 4 comprenant en plus l'étape de déshydrogénation de la poudre d'hydrure de niobium ou de la poudre d'alliage d'hydrure de niobium à des températures de 100°C à 1000°C après l'étape de broyage.

6. Procédé de production de poudre de niobium, de poudre d'alliage de niobium, de poudre d'hydrure de niobium ou de poudre d'alliage d'hydrure de niobium pour un condensateur selon l'une quelconque des revendications 1 à 5, dans lequel la poudre d'hydrure de niobium ou l'alliage d'hydrure de niobium est broyé jusqu'à ce que la taille moyenne de particules soit de 0,6 nom ou inférieure.
